# EUROPÄISCHE PATENTSCHRIFT

(11) **EP 3 195 715 B1**
(45) Veröffentlichungstag und Bekanntmachung des Hinweises auf die Patenterteilung: **14.08.2019**
(21) Anmeldenummer: 17401003.3
(22) Anmeldetag: 23.01.2017
(51) Int. Cl.: A01C 17/00

(54) **VERFAHREN ZUM DÜNGERSTREUEN**
METHOD FOR SPREADING FERTILIZER
PROCÉDÉ D'ÉPANDAGE D'ENGRAIS

(30) Priorität: 25.01.2016 DE 102016101187
(43) Veröffentlichungstag der Anmeldung: 26.07.2017
(73) Patentinhaber: Amazonen-Werke H. Dreyer GmbH & Co. KG, 49205 Hasbergen (DE)
(72) Erfinder: Rahe, Florian, 49504 Lotte (DE); Große Brinkhaus, Andre, 48149 Münster (DE); Rüsse, Mario, 49080 Osnabrück (DE)

(56) Entgegenhaltungen:
- WO-A1-2012/091990
- DE-A1- 4 222 701
- US-A1- 2009 099 737

## Beschreibung

Die Erfindung betrifft ein Verfahren zum Düngerstreuen gemäß dem Oberbegriff des Anspruchs 1.

Aus der WO 2012/091990 A1 ist bereits ein Verfahren zum Düngerstreuen bekannt. Es ist vorgesehen, dass dem Landwirt über eine Anzeige eine Warnung ausgegeben wird sobald sich der Düngerstreuer während des Ausbringens einer empfindlichen Fläche nähert, auf welche kein Material ausgebracht werden darf, und dies aufgrund der vorherrschenden Windverhältnisse nicht gewährleistet ist. Diese Warnung soll den Landwirt veranlassen, die Parameter des Ausbringens derart zu verändern, dass kein Material auf die empfindliche Fläche ausgebracht wird.

Für den Landwirt ist die Kenntnis über die Windstärke und die Windrichtung sehr hilfreich bei der Beurteilung ob und welche Maßnahmen gegebenenfalls eingeleitet werden müssen.

Wie ferner die EP 2 556 738 A1 beschreibt, ist beim Ausbringen von Mineraldünger mit Hilfe eines Zentrifugaldüngerstreuers bei windigen Witterungsverhältnissen die gleichmäßige Düngerausbringung gestört. Es gibt bereits Windkorrektureinrichtungen, die die Windgeschwindigkeit und Windrichtung bei der Einstellung und Steuerung des Düngerstreuers berücksichtigen. Im Normalstreumodus werden dann die von einer Korrektureinrichtung berechneten Sollwerte zum Ansteuern bzw. Regeln entsprechender Stellglieder zur Erzeugung des Streubilds übernommen und eingestellt. Entsprechendes erfolgt automatisch und kontinuierlich.

Die DE 42 22 701 A1 offenbart ein Verfahren zum Düngerstreuen gemäß dem Oberbegriff des Anspruchs 1.

Hiervon ausgehend liegt der vorliegenden Erfindung die Aufgabe zugrunde, ein Verfahren und einen Düngerstreuer bereitzustellen, die einen sicheren Betrieb auch bei Windeinfluss ermöglichen.

Erfindungsgemäß wird diese Aufgabe durch die Merkmale des Anspruchs 1 gelöst.

Gemäß der vorliegenden Erfindung wird beim Düngerstreuen ein vorbestimmtes Streubild erzeugt und eine Windstärke und eine Windrichtung gemessen. Gemäß der vorliegenden Erfindung werden Signale, die der gemessenen Windstärke und/oder Windrichtung entsprechen, an eine Anzeige weitergeleitet, die die Windstärke und/oder Windrichtung optisch anzeigt. Eine entsprechende Anzeige kann beispielsweise das Display eines Bordcomputers des Düngerstreuers sein oder aber eine gesonderte Anzeige. Der Landwirt hat nun Kenntnis über die Windstärke und Windrichtung, was bei der Beurteilung ob und gegebenenfalls welche weiteren Maßnahmen notwendig sind, sehr hilfreich ist.

Wenn die Windgeschwindigkeit zu hoch ist, d.h. höher als eine vorbestimmte Windstärke, wird ein Warnsignal erzeugt. Wenn also z.B. erfasst wird, dass eine Windstärke größer oder gleich einem Grenzwert ist, wird gemäß einer bevorzugten Ausführungsform das Warnsignal erzeugt, wobei dazu insbesondere ein Messsignal, das der Windstärke entspricht oder ein dazu proportionales Signal mit dem Grenzwert verglichen wird. Dazu kann neben einem Messsignal auch ein Signal, das der Drehzahl einer Schleuderscheibe entspricht herangezogen werden, da dieses Signal ebenfalls proportional zur Windstärke verändert wird, wenn ein Windkorrektursystem verwendet wird. Der Vergleich des Signals mit dem Grenzwert kann z.B. in einer Steuereinrichtung erfolgen. Somit kann der Landwirt gewarnt werden, wenn die Windstärke für einen ordnungsgemäßen Betrieb des Düngerstreuers zu hoch ist. Daher ist eine sichere Betriebsweise stets gewährleistet.

Das Warnsignal kann optisch und/oder akustisch als Warnmeldung angezeigt werden. Das Warnsignal kann beispielsweise am gleichen Bildschirm wie die Windstärke und die Windrichtung angezeigt werden. Das Warnsignal kann nicht nur an eine optische Anzeige weitergeleitet werden, sondern zusätzlich oder alternativ auch an eine akustische Einrichtung, die beispielsweise einen Warnton erzeugt, wenn eine bestimmte Windgeschwindigkeit >= als der vorbestimmte Grenzwert ist. Das beispielsweise durch die optische Anzeige ausgegebene Warnsignal kann durch ein Signal einer Steuereinrichtung veranlasst werden.

Erfindungsgemäß wird in Abhängigkeit der gemessenen Windstärke und Windrichtung mindestens ein Sollwert zum Ansteuern/Regeln von mindestens einem Stellglied zur Erzeugung des vorbestimmten Streubilds angepasst. Ist ein entsprechendes Windkorrektursystem vorgesehen, so kann beispielsweise durch Einstellen der Wurfweite, d.h. der Drehgeschwindigkeit der Schleuderscheibe oder beispielsweise durch Einstellen des Abwurfwinkels, d.h. der Position des Einleitsystems, das Ist-Streubild entsprechend korrigiert werden, so dass wieder das ursprüngliche Sollstreubild erhalten wird.

Der Grenzwert ist dann vorteilhafterweise derart festgelegt, dass er am Anfang eines Bereichs liegt, in dem durch Sollwertänderung das vorbestimmte Streubild nicht mehr erzielt werden kann. Ein Grenzwert kann auch zusätzlich oder alternativ vor diesem Bereich liegen um den Landwirt rechtzeitig zu warnen.

Erfindungsgemäß wird also ein Warnsignal erzeugt, wenn durch Sollwertveränderung das vorbestimmte Streubild nicht mehr erreicht werden kann, weil die Grenzen des Düngerstreuers erreicht sind, d.h. z.B. wenn die notwendige Sollwertvorgabe für ein entsprechendes Stellglied dem maximal einstellbaren Sollwert dieses Stellglieds entspricht oder diesen überschreitet oder die maximal mögliche Änderungsrate der Geschwindigkeit des Stellglieds (z.B. Beschleunigung der Schleuderscheibe) langsamer als die Änderungsrate der Windgeschwindigkeit ist, so dass das Streubild nicht ausreichend schnell korrigiert werden kann. Ein entsprechendes Warnsignal warnt den Landwirt, damit dieser den Streuvorgang gegebenenfalls beenden kann. Das heißt, dass der Landwirt exakt zum richtigen Zeitpunkt erkennt, ab wann ein Düngerstreuen nicht mehr sinnvoll ist und entsprechendes nicht nur grob einschätzen oder raten muss. Es ist auch möglich, dass z.B. zusätzlich oder alternativ schon vor Erreichen des maximal einstellbaren Sollwerts oder vor dem Einstellen der maximalen Änderungsrate der Geschwindigkeit ein Warnsignal ausgegeben wird z.B. innerhalb der letzten 15 % des Arbeitsbereichs des Stellglieds, um den Landwirt zu warnen. Bei einer maximalen Schleuderscheibendrehzahl von 1000 U/min kann so also schon in einem Bereich ab 850 U/min ein erstes Warnsignal erzeugt werden.

Gemäß einem bevorzugten Ausführungsbeispiel wird also ein Warnsignal erzeugt, wenn und/oder bevor die Leistungsgrenze von mindestens einem Stellglied erreicht ist, insbesondere wenn und/oder bevor die maximale Drehzahl einer Schleuderscheibe bereits erreicht ist und nicht weiter erhöht werden kann und/oder die Position eines Einleitsystems über einer Schleuderscheibe nicht weiter in Richtung Wurfwinkelvergrößerung oder Wurfwinkelverkleinerung verstellt werden kann. Dabei ist es vorteilhaft, wenn die entsprechende Drehzahl und/oder Position des Einleitsystems eine bestimmte Zeit lang vorliegt bevor ein Warnsignal ausgegeben wird.

Es ist auch möglich, dass ein Warnsignal ausgegeben wird, wenn der Wind zu böig ist d.h. dass wenn z.B. erfasst wird, dass die Änderungsrate der Windgeschwindigkeit ein oder mehrmals (öfter als eine bestimmte Anzahl) einen vorbestimmten Wert übersteigt insbesondere wenn die maximal mögliche Änderungsrate der Geschwindigkeit eines Stellglieds, z.B. der Drehgeschwindigkeit einer Schleuderscheibe kleiner als die Änderungsrate der Windgeschwindigkeit ist. Somit kann z.B. die erforderliche Drehzahlerhöhung vom Düngerstreuer nicht schnell genug eingestellt werden, so dass mit Hilfe eines Windkorrekturprogramms kein exaktes vorbestimmtes Streubild eingestellt werden kann

Der Grenzwert kann entweder als fester Grenzwert für eine Windstärke eingegeben sein oder aber auch parameterabhängig sein, d.h. insbesondere von der Windrichtung oder einem Windrichtungsbereich abhängig sein. Das heißt, dass abhängig davon, aus welcher Windrichtung der Wind kommt oder in welchem Windrichtungsbereich er weht, der Grenzwert entsprechend angepasst werden kann. Entsprechende Werte können beispielsweise in einer Steuereinheit hinterlegt sein. Der Grenzwert kann auch von unterschiedlichen Düngersorten, Düngereigenschaften etc. abhängig sein.

Es ist besonders vorteilhaft, wenn die Windstärke und/oder -richtung optisch durch ein Piktogramm auf einem Bildschirm dargestellt werden. So kann beispielsweise die Windstärke und Windrichtung in Form einer Windrose dargestellt werden, die in einem entsprechenden Arbeitsmenü dargestellt ist.

Es ist auch möglich, dass sich das Erscheinungsbild des Piktogramms ändert, insbesondere die Form und/oder Größe und/oder Farbe des Piktogramms und zwar in Abhängigkeit der Windstärke und/oder Windrichtung. So kann sich beispielsweise die Farbe der Windrose ändern, wenn die Windstärke zunimmt. Auch ein Pfeil, der eine Windrichtung angibt, kann entsprechend seine Richtung ändern. Die Windstärke kann auch in Form einer Windfahne dargestellt werden, die beispielsweise je nach Windstärke ihre Farbe oder ihr Muster ändert. Die Windstärke kann auch in Form eines Balkendiagramms dargestellt werden. Zusätzlich oder alternativ können die Windstärke und Windrichtung auch als Zahlenwerte angegeben werden. Durch die Verwendung von Piktogrammen für die Windrichtung und/oder Windstärke kann der Landwirt schnell und einfach die momentanen Windbedingungen einschätzen.

Vorteilhafterweise können die Grenzwerte empirisch bestimmt werden und vorab werksseitig in beispielsweise einen Speicher einer Steuereinheit des Düngerstreuers eingegeben werden. Es ist auch möglich das der Landwirt einen oder mehrere Grenzwerte eingibt.

Ein Düngerstreuer gemäß der vorliegenden Offenbarung umfasst eine Einrichtung zum Messen der Windstärke und Windrichtung. Ferner umfasst der Düngerstreuer eine Anzeige, an die die Messwerte der Messeinrichtung bzw. proportionale Signale geleitet werden können zur Anzeige der Windstärke und/oder Windrichtung. Dabei können die Messsignale entweder über Kabelverbindungen oder beispielsweise auch drahtlos, über Funk, Bluetooth-Verbindung etc. weitergeleitet werden.

Vorteilhafterweise umfasst der Düngerstreuer eine Steuereinheit die bei zu hoher Windgeschwindigkeit ein Warnsignal erzeugt und die insbesondere die Messsignale (oder proportionale Signale) für die Windstärke mit einem Grenzwert vergleicht und bei Erreichen oder Überschreiten des Grenzwerts ein Warnsignal erzeugt.

Durch die Änderung des Erscheinungsbilds eines Piktogramms kann ein Landwirt auf einfache Art und Weise die Windbedingungen erkennen und richtig einschätzen.

Vorteilhafterweise wird das Signal optisch und/oder akustisch angezeigt. Dazu kann das Signal beispielsweise an einer Anzeige als Piktogramm angezeigt werden oder aber in Form einer Warnleuchte oder eines Warntons angezeigt werden. Vorteilhafterweise umfasst die Steuereinheit einen Speicher, in dem der Grenzwert oder die Grenzwerte abgespeichert werden können oder fest hinterlegt sind. Die Steuereinheit kann sich beispielsweise am Düngerstreuer oder im Führerhaus eines Ackerschleppers befinden. Signale der Steuereinheit können mittels einer Datenübertragungsleitung oder drahtlos an die Anzeige übermittelt werden. Die Anzeige kann sich am selben Ort wie die Steuereinheit oder räumlich getrennt von dieser befinden, beispielsweise kann die Steuereinheit am Düngerstreuer angeordnet sein, die Anzeige sich aber im Führerhaus des Ackerschleppers befinden.

Die ermittelten Windstärken und Windrichtungen können absolute oder relative Werte aufweisen. Beispielsweise kann die Windstärke relativ zur Geschwindigkeit des Ackerschleppers gemessen und/oder angezeigt und die Windrichtung relativ zur Orientierung des Ackerschleppers gemessen und/oder angezeigt werden.

Die vorliegende Erfindung wird nachfolgend unter Bezugnahme folgender Figuren näher erläutert.
- Fig. 1: zeigt grob schematisch eine Seitenansicht eines an einen Ackerschlepper angekoppelten Düngerstreuers.
- Fig. 2: zeigt grob schematisch eine Draufsicht auf einen Düngerstreuer.
- Fig. 3: zeigt ein Streubild mit und ohne Seitenwindeinfluss.
- Fig. 4: zeigt grob schematisch eine Anzeige, die ein Arbeitsmenü darstellt.
- Fig. 5: zeigt einen Signalplan gemäß einem Ausführungsbeispiel der vorliegenden Erfindung.
- Fig. 6: zeigt einen Signalplan gemäß einer weiteren Ausführungsform der vorliegenden Erfindung.

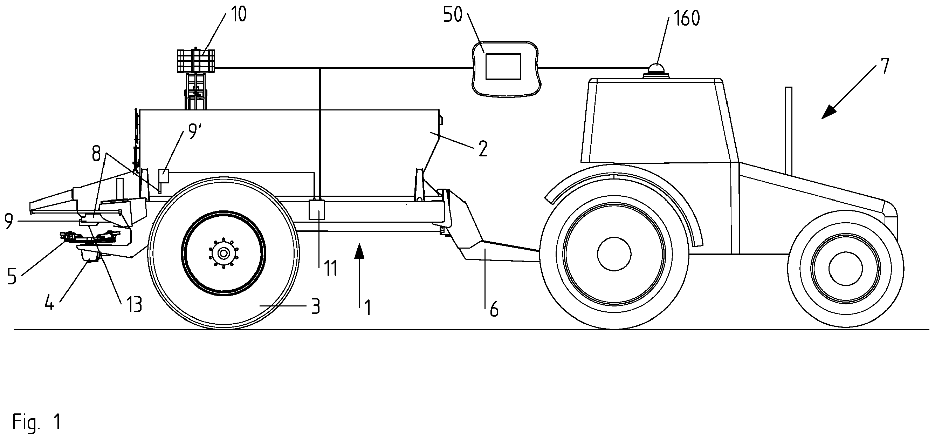

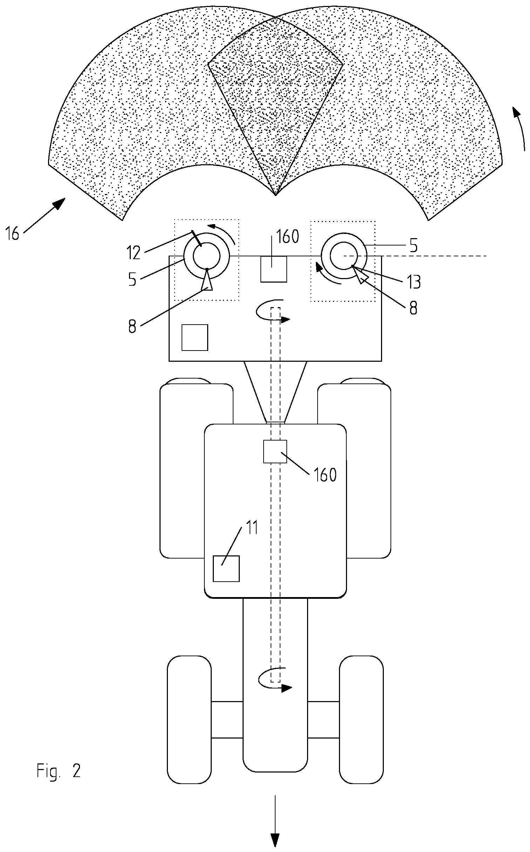

Figuren 1 und 2 zeigen einen Düngerstreuer, hier in Form eines Zentrifugaldüngerstreuers 1 mit einem Vorratsbehälter 2 und einem Fahrwerk 3. Der Düngerstreuer ist über die Zugdeichsel 6 an einen Ackerschlepper 7 angekuppelt. Bei diesem Ausführungsbeispiel ist der Düngerstreuer 1 als Zweischeibenstreuer ausgebildet und umfasst zwei separat ansteuerbare Schleuderscheiben 5. Die Schleuderscheiben 5 sind wie durch die Pfeile (Fig. 2) angedeutet über einen motorischen Antrieb 4 getrennt antreibbar. Bei diesem Ausführungsbeispiel drehen sich die Scheiben beispielsweise nach außen. Auf den Schleuderscheiben 5 können Wurfschaufeln 12 (Fig. 2) ausgebildet sein, die beispielsweise auf bekannte Weise hinsichtlich ihres Anstellwinkels verstellbar befestigt sind. Der Übersichtlichkeit halber ist nur eine einzige Streuschaufel 12 stark schematisiert angedeutet. Ferner ist oberhalb der Schleuderscheiben 5 jeweils ein Einleitsystem 13 für Dünger vorgesehen, wobei die Position der Aufgabefläche 13, individuell verstellbar ist, zum Beispiel in / entgegen der Drehrichtung der Schleuderscheibe 5 und/oder radial. Über ein jeweiliges Dosierorgan 8 kann über entsprechende Aktoren 9 die eingeleitete Menge pro Zeit des Düngers auf jeder Seite eingestellt werden. Der Düngerstreuer 1 und/oder der Schlepper umfassen ferner wenigstens ein GPS-System 160 und wenigstens eine Steuereinheit zum Ansteuern der Stellglieder zur Erzeugung eines vorbestimmten Streubildes 16. Die Steuerung kann Software- oder Hardwaremäßig realisiert werden, wobei vorzugsweise ein Bordcomputer 11 vorgesehen ist, in dem zum Beispiel bestimmte Auswerte- und Steuerungsprogramme hinterlegt sein können.

Fig. 2 zeigt beispielsweise einen für das Arbeiten entlang einer Feldfahrgasse symmetrisch angeordneten Normalstreufächer 16 hinter dem Düngerstreuer 1. Ein entsprechendes Streubild ist beispielsweise als vorbestimmtes Streubild, in bekannter Weise zum Beispiel im Bordcomputer 11 bzw. einer entsprechenden Steuereinrichtung eingespeichert. Die einzelnen Stellglieder werden dann von der Steuereinrichtung beziehungsweise dem Bordcomputer 11 mit entsprechenden Sollwerten angesteuert, derart, dass das entsprechende Streubild erzeugt wird. Dabei werden beispielsweise die Antriebselemente 4 der jeweiligen Schleuderscheiben 5 angesteuert und/oder aber die Aktoren 9 der Dosierorgane 8 und/oder aber Mittel zur Einstellung der Position der Aufgabefläche 13, das heißt z.B. Mittel zum Einstellen der Stellung eines über einer Schleuderscheibe ausgebildeten Einleitsystems 13. Aber auch die Winkelposition der Wurfschaufeln 12 können auf einen entsprechenden Sollwert eingestellt werden. Dabei können die Stellglieder für die linke und rechte Seite, d.h. die linke und rechte Schleuderscheibe separat angesteuert werden.

Der Düngerstreuer 1 umfasst eine Einrichtung 10 zum Messen der Windstärke und der Windrichtung, die Daten an die Steuereinrichtung beziehungsweise den Bordcomputer 11 übermittelt. Der Bordcomputer 11 weist einen Anzeigebildschirm 50 auf. Mit der Einrichtung zum Messen der Windstärke und Windrichtung können die jeweils wirkenden Windverhältnisse im Bereich des Streubilds erfasst werden. In dem Bordcomputer 11 bzw. der Steuereinrichtung können Stoffdaten über die Streueigenschaften mittels geeigneter Eingabevorrichtungen eingegeben werden. Die Stoffdaten wurden vorab im Labor ermittelt. Die im Labor ermittelten verschiedenen Stoffeigenschaften der Düngersorten, die Einfluss auf das Flugverhalten haben, sowie bestimmte aerodynamische Gleichungen ermöglichen z.B. die Wurfparabeln bei Seitenwind zu berechnen.

Gemäß der vorliegenden Erfindung ist eine Korrektureinrichtung vorgesehen, die beispielsweise als Korrekturprogramm im Bordcomputer 11 oder einer Steuereinrichtung integriert sein kann. Diese Korrektureinrichtung ermöglicht, dass mindestens ein Sollwert zum Ansteuern/Regeln von mindestens einem der vorab genannten Stellglieder zur Erzeugung des Streubilds in Abhängigkeit der gemessenen Windstärke und Windrichtung angepasst wird. Dies ist erforderlich, weil sich aufgrund von Seitenwindeinfluss die Ausbringung des Düngers auf der zu verteilenden Fläche entsprechend der Seitenwindverhältnisse ändert.

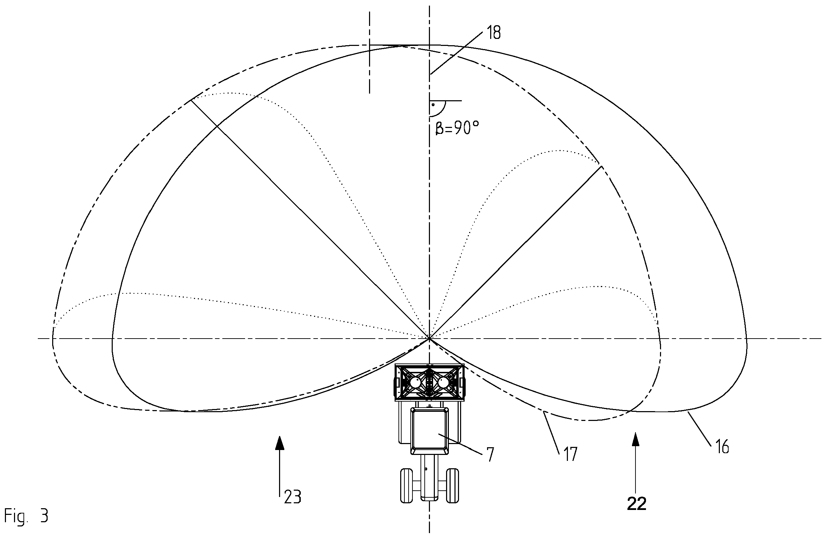

Fig. 3 zeigt in schematischer Weise einen Düngerstreuer 1, an dem ein Ackerschlepper 7 angebaut ist und Streubilder, das heißt Streufächer 16 und 17 ohne und mit Seitenwindeinfluss. Mit durchgezogener Linie 16 ist der vorbestimmte sich aus den beiden überlappenden Streufächern ergebende Gesamtstreufächer ohne Seitenwindeinfluss dargestellt. Dieser entspricht beispielsweise dem vorbestimmten Soll -Streubild 16. Mit strichpunktierten Linien ist der sich aus den beiden überlappenden Streufächer ergebende hörnchenförmige Gesamtstreufächer 17 mit Seitenwindeinfluss dargestellt, der dem Ist- Streubild entspricht.

Durch entsprechende Korrekturmaßnahmen beispielsweise hinsichtlich der Drehzahl der Schleuderscheiben und/oder Einstellung der Aktoren 9 der Dosierorgane 8 und/oder die Lage der Dosierorgane beziehungsweise eines Einleitsystems 13 auf die jeweilige Schleuderscheibe lässt sich der Seitenwindeinfluss kompensieren, sodass wieder das vorbestimmte Streubild 16 entsteht.

Wie bereits erläutert, kann diese Ansteuerung über den Bordcomputer 11 erfolgen, indem ein entsprechendes Korrekturprogramm hinterlegt ist, das derart ausgelegt ist, dass in einem ersten Korrekturmodus der mindestens eine Sollwert zum Ansteuern/Regeln von jeweils mindestens einem Stellglied 4, 9 derart angepasst wird, dass sich die seitliche Ausdehnung auf der dem Seitenwind zugewandten Seite 22 des Düngerstreuers 1 vergrößert und in einem zweiten Korrekturmodus der mindestens eine Sollwert derart angepasst wird, dass sich die seitliche Ausdehnung auf der dem Seitenwind abgewandten Seite 23 des Düngerstreuers 1 verkleinert. Im ersten Korrekturmodus kann beispielsweise die Drehzahl der Schleuderscheibe, die dem Wind zugewandt ist, das heißt auf der Seite 22 liegt, erhöht werden und die Drehzahl der gegenüberliegenden Schleuderscheibe verringert werden. Auch ist es möglich, das Streubild auf der Seite 23 nach innen, das heißt in Richtung der Mittelachse des Düngerstreuers 18 zu drehen und auf der dem Wind zugewandten Seite 22 nach außen zu drehen. Dies kann beispielsweise durch Ändern des Abwurfwinkels, insbesondere der Position der Aufgabefläche über der Schleuderscheibe und/oder durch Verändern der Stellung der Wurfschaufein erfolgen. So kann das in Fig. 3 dargestellte vorbestimmte Streubild 16 wieder erlangt werden. Um das vom Wind verzerrte Streubild wieder auszugleichen werden die Sollwerte für die Stellglieder der jeweiligen Schleuderscheiben 5 unterschiedlich angepasst. Zur Berechnung der Änderung der Sollwerte können beispielsweise in dem Bordcomputer diverse Algorithmen oder Tabellen hinterlegt sein. Dabei wird z.B. als Seitenwind die relative Windrichtung β zur Mittelachse 18 beispielsweise in einem Bereich von 15 bis 165 Grad, sowie die Windgeschwindigkeit berücksichtigt.

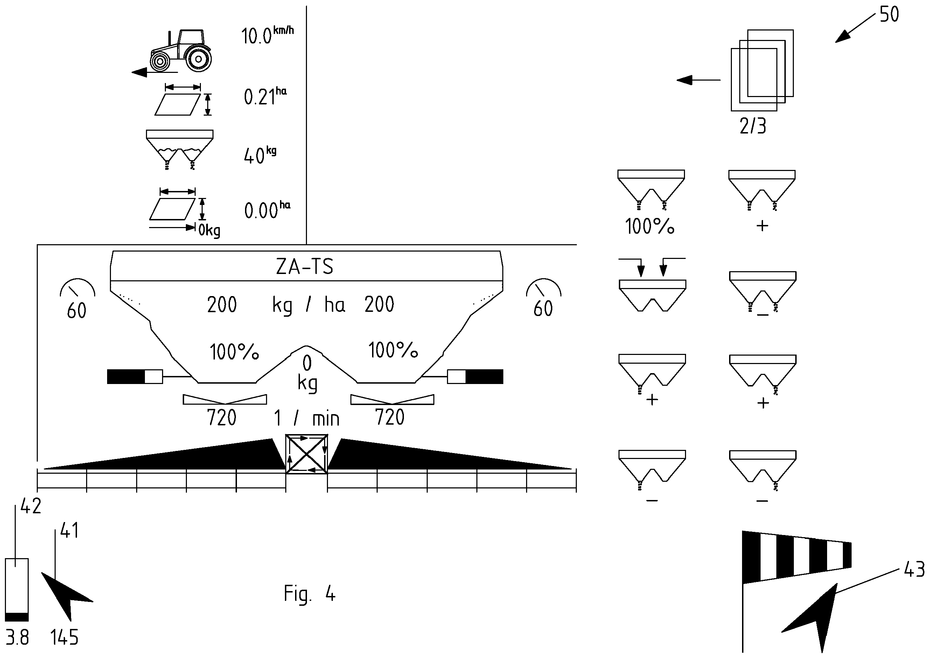

Das Korrekturprogramm korrigiert bei z.B. Seitenwind die Sollwerte automatisch und kontinuierlich. Für den Landwirt ist jedoch auch die Kenntnis über die Windstärke und die Windrichtung sehr hilfreich, insbesondere bei der Beurteilung, ob und welche Maßnahmen gegebenenfalls eingeleitet werden müssen. Gemäß der vorliegenden Erfindung ist nun, wie in Fig. 4 dargestellt, eine Anzeige 50 vorgesehen, die beispielsweise dem Display 50 in Fig. 1 entspricht. Fig. 4 zeigt eine Abbildung eines Arbeitsmenüs, wobei auf dieser Anzeige die Windstärke durch das Piktogramm 42 und die Windrichtung durch das Piktogramm 41 dargestellt sind. Zusätzlich sind die Windstärke und die Windrichtung noch als Zahlenwert angegeben. In Abb. 4 beträgt die Windstärke 3,8 und die Windrichtung 145 Grad. Der Aufbau des Arbeitsmenüs kann auch derart gestaltet sein, dass wenn der Landwirt auf das Icon 43, das Windstärke und Windrichtung angibt, drückt, die Piktogramme 42 und 41 erscheinen.

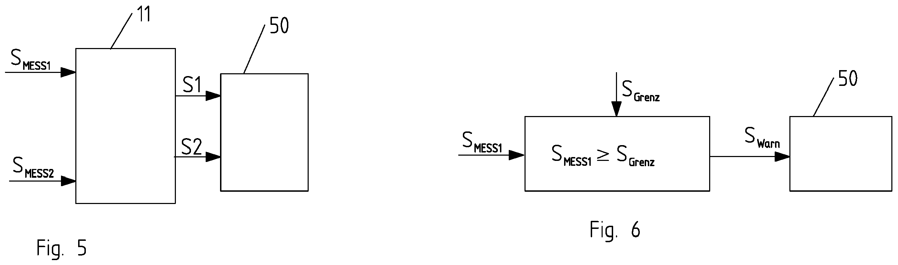

Die Einrichtung zum Messen der Windstärke und Windrichtung 10 ist vorzugsweise fest am Düngerstreuer installiert und kann diese Messsignale S_{Mess1;}S_{Mess2} entweder direkt zu der Anzeige 50 senden, oder aber über eine Steuereinrichtung 11 oder Korrektureinrichtung, die gegebenenfalls auch in der Steuereinrichtung integriert sein kann, wie aus Fig. 5 hervorgeht entsprechende Signale S_{1,}S₂ weiterleiten . Die entsprechenden Grafikdaten werden dann an der Anzeige 50 angezeigt. Ändert sich die gemessene Windstärke und/oder Windrichtung, so kann sich auch das Erscheinungsbild eines jeweiligen Piktogramms ändern. So könnte sich beispielsweise die Farbe eines Piktogramms z.B. einer Windrose 41 in Abhängigkeit der Windstärke ändern. Mit Ändern der Windrichtung würde sich entsprechend die Pfeilposition ändern. Mit zunehmender Windstärke würde sich beispielsweise im Piktogramm 42 die ausgefüllte Fläche nach oben hin vergrößern, d.h. der Balken höher werden. Auch die Farbe der Fahne im Feld 43 könnte sich mit sich ändernder Windstärke ändern.

Somit kann der Landwirt auf einfache Art und Weise die Windbedingungen erkennen, wobei das sich geänderte Piktogramm gleichzeitig als Warnmeldung dienen kann.

Es ist möglich, dass bei zu hoher Windgeschwindigkeit ein Warnsignal S_{Warn} erzeugt und angezeigt wird. Dazu können beispielsweise ein oder mehrere Grenzwerte z.B. in einen Speicher der Steuereinheit 11 eingegeben werden. Es ist auch möglich, dass diese Grenzwerte bereits fest hinterlegt sind. Wie aus Fig. 6 hervorgeht, kann beispielsweise ein Signal S_{Mess1}, das der Windstärke entspricht, beispielsweise in der Steuereinheit 11 mit dem entsprechenden Grenzwert S_{Grenz} über eine Vergleichseinheit verglichen werden. Erreicht oder überschreitet der Messwert bzw. die Windgeschwindigkeit den Grenzwert, so wird ein entsprechendes Warnsignal S_{Warn} erzeugt. Es können auch mehrere Grenzwerte gespeichert sein, so dass bei unterschiedlichen Windstärken entsprechende Warnmeldungen erzeugt werden können.

Dieses Warnsignal S_{Warn} kann optisch oder akustisch angezeigt werden. Insbesondere kann das Warnsignal bzw. die Warnmeldung auf dem Bildschirm 50 dargestellt werden. Dies kann beispielsweise derart erfolgen, dass eine extra Anzeige erfolgt, oder dass sich beispielsweise das Piktogramm für die Windstärke entsprechend ändert, beispielsweise eine andere Farbe annimmt, wie beispielsweise Rot.

Alternativ oder zusätzlich kann die Warnmeldung auch akustisch über eine entsprechende nicht dargestellte Einrichtung erfolgen, indem beispielsweise ein Warnton ausgegeben wird.

Verwendet der Düngerstreuer eine Windkorrektureinrichtung, so wird, um den Windeinfluss zu kompensieren, die Windgeschwindigkeit und die Windrichtung kontinuierlich gemessen und in Abhängigkeit dieser Messwerte, wie zuvor beschrieben, mindestens ein Sollwert zum Ansteuern/Regeln von jeweils mindestens einem Stellglied 4, 9 zur Erzeugung des vorbestimmten Streubilds 16 angepasst.

Wenn der Windeinfluss zu stark wird, kann jedoch das vorbestimmte Streubild 16 nicht mehr erreicht werden wenn die Grenzen des Düngerstreuers erreicht sind, d.h. z.B. wenn die notwendige Sollwertvorgabe für ein entsprechendes Stellglied dem maximal einstellbaren Sollwert dieses Stellglieds entspricht oder überschreitet. Das bedeutet, dass wenn beispielsweise die maximale Drehzahl einer Schleuderscheibe 5 bereits erreicht ist, die Drehzahl nicht weiter erhöht werden kann, um eine entsprechende Korrektur vorzunehmen. Die maximale Drehzahl der Schleuderscheibe beträgt beispielsweise 1000 U/min. Um dem Landwirt ein Feedback zu geben, ob diese Grenze schon erreicht ist, ist es ebenfalls möglich, ein entsprechendes Warnsignal zu erzeugen und eine Warnmeldung auszugeben, wobei auch hier das Warnsignal S_{Warn} optisch beispielsweise auf der Anzeige 50 und/oder akustisch wiedergegeben werden kann. Aber auch die Position des Einleitsystems 13 über der Schleuderscheibe 5 kann nur in bestimmten Grenzen eingestellt werden. Es kann deswegen auch ein Warnsignal S_{Warn} erzeugt werden und eine entsprechende Warnmeldung optisch oder akustisch ausgegeben werden, wenn die Position des Einleitsystems 13 über der Schleuderscheibe nicht weiter in Richtung Wurfwinkelvergrößerung oder Wurfwinkelverkleinerung verstellt werden kann und deswegen das Soll-Streubild nicht erreicht werden kann.

Es ist jedoch auch möglich, dass bereits bevor der maximal einstellbare Sollwert erreicht wurde, ein erstes Warnsignal S_{Warn0} erzeugt wird, das beispielsweise innerhalb der letzten 5 % des Arbeitsbereichs (Arbeitsbereich entspricht von 0-1000 U/min) ausgegeben wird, um den Landwirt zu warnen. Bei einer maximalen Schleuderscheibendrehzahl von 1000 U/min kann also schon in einem Bereich von z.B. ab 950 U/min ein erstes Warnsignal erzeugt werden. Bei diesem Ausführungsbeispiel wird eine erste Warnmeldung bei einer Windstärke, die einer Drehzahl von 950 U/min entspricht, erzeugt. Bei diesem Ausführungsbeispiel ändert sich dabei beispielsweise die Farbe der Windrose 41 und gegebenenfalls auch des Balkens 42. Steigt der Wind weiter und somit auch die Drehzahl aufgrund der Korrektur, kann ein zweites Warnsignal S_{Warn} erzeugt werden, das unterschiedlich zum ersten Warnsignal dargestellt wird. Vorzugsweise werden diese Warnsignale erst dann erzeugt und angezeigt, wenn entsprechende Grenzwerte, hier in Form der Drehzahlen, für eine bestimmte Zeit vorliegen. Die vorbestimmte Zeit liegt beispielsweise in einem Bereich von 3 bis 5 s. Somit kann man verhindern, dass Fehlanzeigen erfolgen.

Es ist auch möglich, dass ein Warnsignal erzeugt wird, wenn die Position eines Einleitsystems über einer Schleuderscheibe nicht weiter in Richtung Wurfwinkelvergrößerung oder Wurfwinkelverkleinerung verstellt werden kann, derart, dass das vorbestimmte Streubild erzeugt werden kann. Auch hier kann, wie zuvor beschrieben, ein entsprechendes Warnsignal erzeugt und optisch oder akustisch angezeigt werden.

Die Grenzen des Düngerstreuers werden auch bei sehr böigem Wind erreicht, da z.B. die erforderliche Drehzahlerhöhung vom Düngerstreuer nicht so schnell eingestellt werden kann, derart, dass das Streubild korrekt korrigiert wird. Dabei wird gemäß der vorliegenden Erfindung erfasst, ob der Wind zu böig ist, d.h. dass beispielsweise die Änderungsrate der Windgeschwindigkeit bestimmt wird, und wenn die Änderungsrate der Windgeschwindigkeit einen vorbestimmten Wert übersteigt, z.B. 1,5 m/s², von der Steuereinrichtung 11 beispielsweise ein Warnsignal S_{Warn} erzeugt wird. Gegebenenfalls wird das Warnsignal erst ausgegeben, wenn die Änderungsrate in einem bestimmten Zeitraum (z.B. 5 Minuten) mehrmals (öfter als eine vorbestimmte Anzahl, z.B 30 mal) den Grenzwert (von z.B. 1,5 m/s²) überschritten hat. Dann ist beispielsweise die Änderungsrate der Windgeschwindigkeit größer als die maximal mögliche Änderungsrate der Geschwindigkeit eines Stellglieds, d.h. z.B. der Drehgeschwindigkeit einer Schleuderscheibe.

Dies kann mit einem Vergleich von zwei über einen unterschiedlich langen Zeitraum gefilterten Werten erfolgen. Überschreitet beispielsweise die Differenz aus der aktuellen und einer gemittelten Windgeschwindigkeit in einem Zeitraum von z.B. 5 Minuten an z.B. 30 Zeitpunkten einen Grenzwert von z.B. 1,5 m/s, kann der Einfluss der Böigkeit nicht mehr korrigiert werden. Außerdem kann auch die jeweilige aktuelle Streuscheibendrehzahl berücksichtigt werden, indem sie mit der Solldrehzahl verglichen wird. Überschreiten die Differenzen aus Soll- und Istdrehzahl einen vorbestimmten Grenzwert, z.B. 50 1/min für einen Zeitraum, z.B. von mehr als 3 Sekunden, kann der Windeinfluss/Böigkeit nicht mehr korrigiert werden. In diesem Fall wird eine Böigkeitswarnung ausgegeben.

Gemäß der vorliegenden Erfindung kann also eine Warnmeldung erfolgen, wenn die Windstärke einen bestimmten Grenzwert übersteigt oder im Fall eines Windkorrektursystems ein Warnsignal ausgegeben werden, kurz bevor oder wenn das Streubild aufgrund des starken Windes oder von Windböen nicht mehr ausreichend korrigiert werden kann. Somit kann der Landwirt erkennen, ob weitere Maßnahmen notwendig sind, insbesondere ob das Streuen beendet werden muss.

## Patentansprüche

1. Verfahren zum Düngerstreuen, wobei ein vorbestimmtes Streubild (16) erzeugt wird und eine Windstärke und Windrichtung gemessen wird, wobei der gemessenen Windstärke und/oder Windrichtung entsprechende Signale (S1, S2) an eine Anzeige (50) weitergeleitet werden, die die Windstärke und/oder Windrichtung anzeigt, wobei zur Korrektur des vom Wind verzerrten Ist-Streubilds (17) in Abhängigkeit der gemessenen Windstärke und Windrichtung mindestens ein Sollwert zum Ansteuern/Regeln von jeweils mindestens einem Stellglied (4, 9) zur Erzeugung des vorbestimmten Streubildes (16) angepasst wird, **dadurch gekennzeichnet, dass** ein Warnsignal (S_{Warn}) erzeugt wird wenn und/oder bevor durch Sollwertveränderung das vorbestimmte Streubild (16) nicht mehr erzeugt werden kann.

2. Verfahren nach Anspruch 1, **dadurch gekennzeichnet, dass** bei zu hoher Windgeschwindigkeit ein Warnsignal (S_{Warn}) erzeugt wird.

3. Verfahren nach Anspruch 1 oder 2, **dadurch gekennzeichnet, dass** entweder ein Messsignal (S_{Mess}) oder ein dazu proportionales Signal, das der Windstärke entspricht mit einem Grenzwert (S_{Grenz}) verglichen wird, wobei bei Erreichen oder Überschreiten des Grenzwerts ein Warnsignal (S_{Warn}) erzeugt wird.

4. Verfahren nach Anspruch 2 oder 3, **dadurch gekennzeichnet, dass** das Warnsignal (S_{Warn}) optisch und/oder akustisch als Warnmeldung angezeigt wird.

5. Verfahren nach Anspruch 1, **dadurch gekennzeichnet, dass** ein Warnsignal erzeugt wird, wenn und/oder bevor
- die maximale Drehzahl einer Schleuderscheibe (5) bereits erreicht ist und nicht weiter erhöht werden kann und/oder
- die Position eines Einleitsystems (13) über einer Schleuderscheibe nicht weiter in Richtung Wurfwinkelvergrößerung oder Wurfwinkelverkleinerung verstellt werden kann.

6. Verfahren nach Anspruch 1, **dadurch gekennzeichnet, dass** ein Warnsignal ausgegeben wird, wenn erfasst wird, dass der Wind zu böig ist, insbesondere wenn einmal oder öfter als eine vorbestimmte Anzahl in einem bestimmten Zeitraum, die maximal mögliche Änderungsrate der Geschwindigkeit eines Stellglieds, z.B. der Drehgeschwindigkeit einer Schleuderscheibe kleiner als die Änderungsrate der Windgeschwindigkeit ist.

7. Verfahren nach mindestens Anspruch 3 und einem der Ansprüche 4-6, **dadurch gekennzeichnet, dass** der Grenzwert parameterabhängig ist, und insbesondere von der Windrichtung oder einem Windrichtungsbereich abhängig ist und/oder von der Düngersorte und/oder Fahrtgeschwindigkeit.

8. Verfahren nach mindestens Anspruch 3 und einem der Ansprüche 4-7, **dadurch gekennzeichnet,**
**dass** der oder die Grenzwert(e) in eine Steuereinheit (11) eingegeben werden können oder hinterlegt sind.

9. Verfahren nach mindestens einem der Ansprüche 1-8, **dadurch gekennzeichnet, dass** die Windstärke und/oder Windrichtung optisch durch ein Piktogramm (41, 42) dargestellt werden, wobei sich vorzugsweise dessen Erscheinungsbild, insbesondere Form und/oder Größe und/oder Farbe in Abhängigkeit der Windstärke und/oder Windrichtung ändert.

## Claims

1. Method for spreading fertilizer, wherein a predetermined spreading pattern (16) is generated and a wind strength and wind direction are measured, wherein signals (S1, S2) which correspond to the measured wind strength and/or wind direction are passed on to a display (50) which indicates the wind strength and/or wind direction, wherein, in order to correct the actual spreading pattern (17) which is distorted by the wind, a setpoint value for actuating/controlling in each case at least one actuator element (4, 9) in order to generate the predetermined spreading pattern (16) is adapted as a function of the measured wind strength and wind direction, **characterized in that** a warning signal (S_{Warn}) is generated if and/or before the predetermined spreading pattern (16) can no longer be generated by changing the setpoint value.

2. Method according to Claim 1, **characterized in that** when the wind speed is excessively high a warning signal (S_{Warn}) is generated.

3. Method according to Claim 1 or 2, **characterized in that** either a measurement signal (S_{Mess}) or a signal which is proportional thereto and which corresponds to the wind strength is compared with a limiting value (S_{Grenz}), wherein when the limiting value is reached or exceeded a warning signal (S_{Warn}) is generated.

4. Method according to Claim 2 or 3, **characterized in that** the warning signal (S_{Warn}) is displayed visually and/or indicated acoustically as a warning message.

5. Method according to Claim 1, **characterized in that** a warning signal is generated if and/or before
- the maximum rotational speed of a spreading disc (5) has already been reached and cannot be increased further and/or
- the position of an application system (13) over a spreading disc can no longer be adjusted further in the direction of increasing the ejection angle or decreasing the ejection angle.

6. Method according to Claim 1, **characterized in that** a warning signal is output if it is sensed that the wind is too blustery, in particular if the maximum possible rate of change of the speed of an actuator element, e.g. the rotational speed of a spreading disc, is lower than the rate of change of the wind speed once or more than a predetermined number of times in a predetermined time period.

7. Method according to at least Claim 3 and one of Claims 4-6, **characterized in that** the limiting value is parameter-dependent and is dependent, in particular, on the wind direction or a wind direction range and/or on the type of fertilizer and/or velocity.

8. Method according to at least Claim 3 and one of Claims 4-7, **characterized in that** the limiting value or values can be input or are stored in a control unit (11) .

9. Method according to at least one of Claims 1-8, **characterized in that** the wind strength and/or wind direction are represented visually by means of a pictogram (41, 42), wherein the appearance thereof, in particular the shape and/or size and/or colour change/changes as a function of the wind strength and/or wind direction.

## Revendications

1. Procédé d'épandage d'engrais, dans lequel un motif d'épandage prédéterminé (16) est généré et une force du vent et une direction du vent sont mesurées, dans lequel des signaux (S1, S2) correspondant à la force du vent et/ou à la direction du vent mesurées sont transmis à un dispositif d'affichage (50) qui affiche la force du vent et/ou la direction du vent, dans lequel au moins une valeur de consigne pour la commande/régulation d'au moins un actionneur (4, 9) respectif destiné à générer le motif d'épandage prédéterminé (16) est adaptée de manière à corriger le motif d'épandage réel (17) déformé par le vent en fonction de la force du vent et de la direction du vent mesurées,
**caractérisé en ce qu'**un signal d'avertissement (S_{warn}) est généré lorsque et/ou avant que le motif d'épandage prédéterminé (16) ne puisse plus être généré par une modification de la valeur de consigne.

2. Procédé selon la revendication 1, **caractérisé en ce qu'**un signal d'avertissement (S_{warn}) est généré lorsque la vitesse du vent est trop élevée.

3. Procédé selon la revendication 1 ou 2, **caractérisé en ce qu'**un signal de mesure (S_{Mess}) ou un signal proportionnel à la force du vent est comparé à une valeur limite (S_{Grenz}), dans lequel un signal d'avertissement (S_{warn}) est généré lorsque la valeur limite est atteinte ou dépassée.

4. Procédé selon la revendication 2 ou 3, **caractérisé en ce que** le signal d'avertissement (S_{warn}) est présenté de manière optique et/ou acoustique sous la forme d'un message d'avertissement.

5. Procédé selon la revendication 1, **caractérisé en ce qu'**un signal d'avertissement est généré lorsque et/ou avant que
- la vitesse de rotation maximale d'un disque centrifuge (5) a déjà été atteinte et ne peut plus être augmentée et/ou
- la position d'un système d'éjection (13) au-dessus d'un disque centrifuge ne peut plus être réglée dans le sens d'une augmentation ou d'une réduction de l'angle d'éjection.

6. Procédé selon la revendication 1, **caractérisé en ce qu'**un signal d'avertissement est émis lorsqu'il est détecté que le vent est trop fort, en particulier lorsqu'une ou plusieurs fois au cours d'une certaine période, la vitesse de variation maximale possible de la vitesse d'un actionneur, par exemple de la vitesse de rotation d'un disque centrifuge, est inférieure à la vitesse de variation de la vitesse du vent.

7. Procédé selon au moins la revendication 3 et l'une des revendications 4 à 6, **caractérisé en ce que** la valeur limite dépend de paramètres et dépend en particulier de la direction du vent ou d'une plage de directions du vent et/ou de la variété d'engrais et/ou de la vitesse de déplacement.

8. Procédé selon au moins la revendication 3 et l'une des revendications 4-7, **caractérisé en ce que** la ou les valeurs limites peut/peuvent être saisie (s) ou stockée(s) dans une unité de commande (11).

9. Procédé selon au moins l'une des revendications 1-8, **caractérisé en ce que** la force du vent et/ou la direction du vent sont représentées optiquement par un pictogramme (41, 42), dans lequel l'aspect dudit pictogramme, en particulier sa forme et/ou sa taille et/ou sa couleur, varie de préférence en fonction de la force du vent et/ou de la direction du vent.
